# FASCICULE DE BREVET EUROPEEN

(11) **EP 1 994 293 B1**
(45) Date de publication et mention de la délivrance du brevet: **26.08.2009**
(21) Numéro de dépôt: 07730994.6
(22) Date de dépôt: 16.02.2007
(51) Int. Cl.: F16C 29/00, F16C 29/04, F16C 32/04, B65G 39/06, B65G 39/02, B65G 39/09, B65G 39/12

(54) **DISPOSITIF A ROULEMENTS ESCAMOTABLES POUR TABLE PORTE-CHARGE ET TABLE PORTE-CHARGE EQUIPEE D'UN TEL DISPOSITIF**
VORRICHTUNG MIT EINZIEHBAREN LAGERN MIT REIBUNGSSCHUTZ FÜR EINE LADEPLATTFORM UND LADEPLATTFORM MIT DERARTIGER VORRICHTUNG
RETRACTABLE ANTIFRICTION BEARINGS DEVICE FOR A LOADING BED AND LOADING BED EQUIPPED WITH SUCH A DEVICE

(30) Priorité: 28.02.2006 FR 0601746
(43) Date de publication de la demande: 26.11.2008
(73) Titulaire: Rotobloc-PSP SARL, 25480 Pirey (FR)
(72) Inventeur: MARCELLI, Pierre, F-25660 Laveze (FR)
(74) Mandataire: Nithardt, Roland
(86) Numéro de dépôt international: PCT/FR2007/000283
(87) Numéro de publication internationale: WO 2007/099213

(56) Documents cités:
- EP-A1- 0 387 168
- AU-A- 5 697 473
- AU-B2- 502 012
- US-A- 2 944 684
- US-B1- 6 279 716
- US-B1- 6 786 318

## Description

### Domaine technique :

La présente invention concerne un dispositif à roulements escamotables pour table porte-charge destiné à faciliter le déplacement et/ou le positionnement de charges lourdes dans un plan de transfert parallèle à ladite table porté-charge, ce dispositif comportant un profilé pourvu de billes et des moyens de déplacement agencés pour déplacer lesdites billes entre une position de travail dans laquelle elles sont saillantes dudit profilé de manière à porter ladite charge et une position de repos dans laquelle elles sont escamotées dans ledit profilé de manière à ne pas porter ladite charge. L'invention concerne également une table porte-charge équipée d'un tel dispositif à roulements.

### Technique antérieure :

Ces tables porte-charge sont largement répandues dans de nombreux domaines de l'industrie. Elles équipent généralement des machines d'usinage, de découpage, d'emboutissage, de formage, d'estampage, ainsi que des forges, des presses d'injection de matières plastiques, composites ou similaires. Elles servent notamment à déplacer et à positionner des charges lourdes, tels que des outils, des moules, des pièces, etc. ces charges pouvant atteindre plusieurs tonnes. Afin de pouvoir déplacer ces charges lourdes, les tables porte-charge sont équipées de dispositifs à roulements escamotables. Elles comportent généralement des rainures parallèles ou perpendiculaires entre elles, ayant une section en T, en I ou similaire, aptes à recevoir ces dispositifs à roulements, appelés segments ou barreaux, pourvus d'organes de roulement escamotables. Ces organes de roulement peuvent être des rouleaux autorisant un déplacement unidirectionnel ou des billes autorisant un déplacement omnidirectionnel. La présente invention s'intéresse plus particulièrement aux billes. Chaque bille est intégrée dans un module de roulement comportant un corps pourvu d'une cuvette à cavité sphérique apte à porter la bille par l'intermédiaire d'un lit de petites billes. Cette bille est maintenue par un chapeau serti ou collé sur le corps pour former un module de roulement monobloc indémontable. Ces modules de roulement sont logés dans des logements borgnes du segment et sollicités par des moyens de déplacement mécaniques ou hydrauliques pour être mobiles entre une position de repos, dans laquelle ils sont escamotés et la charge est portée par la table et est immobile, et une position de travail, dans laquelle ils sont saillants à la surface de la table et la charge est portée par les organes de roulement et est déplaçable sans friction. De tels modules de roulement sont décrits dans les publications EP 0 387 168, US 6,279,716, AU 56,974, AU 502,012, US 6,786,318.

Les rainures des tables porte-charge sont généralement normalisées et de faible largeur. Il est donc très difficile de réaliser des modules de roulement performants, économiques et fiables compte tenu du faible encombrement disponible à l'intérieur de ces rainures. Le diamètre des billes et celui des petites billes sont limités, restreignant d'autant la charge maximale supportable. De plus, il est difficile voire impossible de rendre ces modules de roulement étanches aux poussières, particules et pollution en tout genre, étant donné que la place occupée par le chapeau ne permet pas d'y insérer un joint efficace. Par ailleurs, le centrage de la bille portée par un lit de petites billes n'est pas fiable. La bille en roulement peut se déplacer et se désaxer générant des risques de blocage et endommageant le module de roulement. En conséquence, les performances de roulement sont limitées et les risques de détérioration des modules sont importants par décentrage de 1a bille et/ou l'introduction accidentelle de particules parasites à l'intérieur des modules.

### Exposé de l'invention :

La présente invention vise à résoudre ce problème en proposant un dispositif à roulements escamotables, apte à être logé dans une rainure de largeur normalisée d'une table porte-charge, dans lequel le diamètre des billes ainsi que celui des petites billes sont augmentés, une étanchéité efficace est intégrée autour de la bille, interdisant toute introduction de particules ou de pollution quelconque, liquide ou solide, à l'intérieur du dispositif, et le centrage de la bille est garanti. On obtient ainsi un dispositif de conception très économique, ayant des performances accrues en termes de roulement et de charge maximale supportée, tout en étant plus fiable en termes de durée de vie.

Dans ce but, l'invention concerne un dispositif à roulements du genre indiqué en préambule, **caractérisé en ce que** chaque bille est montée dans un logement dudit profilé au moyen d'une bague de guidage et d'étanchéité pourvue d'une cavité sphérique complémentaire à ladite bille et apte à la recouvrir sur une zone qui s'étend de part et d'autre du plan médian transversal de ladite bille pour la maintenir en position par rapport audit logement et en ce que ladite bague de guidage et d'étanchéité comporte des moyens pour assurer une étanchéité entre ladite bille et ledit logement

Cette construction permet de supprimer le module de roulement classique et de s'affranchir du corps et du chapeau constituant ce module, augmentant ainsi l'espace disponible à l'intérieur du profilé pour y monter notamment cette bague de guidage et d'étanchéité tout en agrandissant le diamètre de la bille et celui des petites billes qui disposent ainsi d'un espace de circulation agrandi.

La bague de guidage et d'étanchéité peut comporter des moyens d'étanchéité intégrés sous la forme de reliefs périphériques ou rapportés sous la forme de joints.

La bague de guidage et d'étanchéité peut être montée dans le logement moyennant un jeu autorisant son déplacement axial par rapport audit logement. Dans ce cas, le logement comporte au moins une butée axiale agencée pour limiter la course de la bague de guidage et d'étanchéité au moins en direction de la sortie de ce logement.

Cette bague de guidage et d'étanchéité peut être réalisée d'une seule pièce en une matière souple, ladite bille étant montée en force dans ladite cavité sphérique, ou peut être réalisée en une matière rigide en au moins deux pièces assemblées de part et d'autre de la bille.

De manière avantageuse, le dispositif comporte, pour chaque bille, un guide de roulement monté dans le logement du profilé, agencé pour être mobile en translation axiale sous l'action des moyens de déplacement, ce guide de roulement étant pourvu d'une cuvette pour guider la bille en rotation par l'intermédiaire d'un lit de petites billes, qui disposent d'un espace de circulation plus grand. Dans ce cas, le logement comporte au moins une butée axiale agencée pour limiter la course du guide de roulement au moins en direction de la sortie de ce logement.

Dans une première forme de réalisation, les moyens de déplacement sont mécaniques et comportent dans chaque logement des éléments ressort agencés pour solliciter ladite bille en position de travail.

Dans une deuxième forme de réalisation, les moyens de déplacement sont hydrauliques et comportent dans chaque logement une chambre alimentée en fluide sous pression, dans laquelle se déplace un piston coopérant avec le guide de roulement de manière à solliciter ladite bille en position de travail. Dans ce cas, le dispositif comporte un circuit hydraulique raccordé à une alimentation de fluide sous pression et communiquant avec toutes les chambres.

Dans une troisième forme de réalisation, les moyens de déplacement sont hydrauliques et comportent, dans chaque logement, un piston délimitant avec ladite bille une chambre alimentée en fluide sous pression de manière à créer un lit de fluide guidant en rotation les billes.

Dans une forme de réalisation préférée, les moyens de déplacement comportent une vanne agencée pour contrôler la pression du fluide à l'intérieur des chambres, cette vanne étant avantageusement ménagée dans le piston amont, et un circuit hydraulique raccordé à une alimentation de fluide sous pression et communiquant avec toutes les chambres par l'intermédiaire de ladite vanne.

Cette vanne peut comporter un clapet monté dans un canal intérieur du piston amont et commandé à l'ouverture par ladite bille en position de repos.

Dans ce but, l'invention concerne également une table porte-charge, **caractérisée en ce qu**'elle comporte des dispositifs à roulements tels que définis ci-dessus, les profilés de ces dispositifs à roulements étant montés fixes par rapport à ladite table ou mobiles dans une direction perpendiculaire à la surface de ladite table.

### Description sommaire des dessins :

La présente invention et ses avantages apparaîtront mieux dans la description suivante de plusieurs modes de réalisation donnés à titre d'exemples non limitatifs, en référence aux dessins annexés, dans lesquels :
- les figures 1A et 1B sont des vues schématiques en coupe longitudinale d'un premier mode de réalisation du dispositif à roulements de l'invention dans une table porte-charge, respectivement en positions de repos et de travail,
- les figures 2A et 2B sont des vues similaires aux figures 1A et 1B d'un second mode de réalisation,
- les figures 3 et 4 sont des vues en coupe axiale du dispositif à roulements respectivement du premier et du second modes de réalisation,
- les figures 5A-C sont des vues schématiques en coupe longitudinale d'un troisième mode de réalisation du dispositif à roulements de l'invention dans une table porte-charge, respectivement en positions de repos, d'équilibre et de travail, et
- les figures 6A-C sont des vues du dispositif à roulements selon le troisième mode de réalisation, respectivement de dessus, en coupe GG et en coupe DD.

### Illustrations de l'invention:

En référence aux figures, le dispositif à roulements escamotables 10a-c selon l'invention est monté dans une table porte-charge 1 pour faciliter le déplacement et/ou le positionnement de charges 2 lourdes dans un plan de transfert T parallèle à la surface S de table porte-charge 1 et généralement horizontal. Ce dispositif à roulements escamotables 10a-c comporte un profilé 20a-c pourvu de billes 30 et de moyens de déplacement 40a-c agencés pour déplacer les billes 30 entre une position de travail dans laquelle elles sont saillantes de la surface S de la table de manière à soulever la charge 2 qui peut être ainsi déplacée par roulage sans friction dans le plan de transfert T, et une position de repos dans laquelle elles sont escamotées par rapport à la surface S de la table, la charge 2 étant immobilisée et reposant sur la table porte-charge 1. La table porte-charge 1 comporte, de manière connue, sur une partie ou la totalité de sa surface S, un nombre défini de rainures 3 normalisées, parallèles ou perpendiculaires entre elles, chaque rainure 3 recevant par coulissement ou emboîtement le profilé 20a-c d'un dispositif à roulements escamotables 10a-c, dont la hauteur est inférieure à la profondeur de la rainure 3. Chaque profilé 20a-c comporte un nombre défini de logements 21a-c, de préférence à intervalles réguliers, ouverts en partie haute et orientés perpendiculairement à la surface de la table porte-charge 1. Dans les figures et pour la compréhension de l'invention, seule une partie du dispositif à roulements escamotables 10a-c est illustrée, ne montrant que deux ou trois billes 30. Il est bien entendu que ce dispositif comporte en réalité un nombre variable de billes 30 en fonction de sa longueur et de la charge à supporter.

La particularité de l'invention réside dans le fait que les billes 30 sont montées directement dans les logements 21a-c du profilé 20a-c au moyen d'une bague de guidage et d'étanchéité 50, indépendante et autoportante, agencée pour maintenir chaque bille 30 en positions axiale et transversale par rapport au logement 21a-c. Chaque bague de guidage et d'étanchéité 50 comporte des moyens d'étanchéité dits extérieurs 51 disposés entre la bague de guidage et d'étanchéité 50 et le logement 21a-c, et des moyens d'étanchéité dits intérieurs 52 disposés entre la bague de guidage et d'étanchéité 50 et la bille 30. Les moyens d'étanchéité 51, 52 peuvent faire partie intégrante de la bague de guidage et d'étanchéité 50 et être constitués de reliefs périphériques tels que des bossages, des collerettes, des lèvres ou similaire. Ils peuvent aussi être des éléments rapportés sur la bague de guidage et d'étanchéité 50 et constitués de joints toriques comme illustré, de lèvres, de boudins ou similaires, logés dans des gorges de forme adéquate prévues dans les périmètres extérieur et intérieur correspondants de la bague de guidage et d'étanchéité 50. Le périmètre extérieur de la bague de guidage et d'étanchéité 50 est complémentaire au logement 21a-c, et de préférence cylindrique. La bague de guidage et d'étanchéité 50 comporte une cavité sphérique 53 complémentaire à la bille 30 et qui la recouvre sur une zone s'étendant de part et d'autre du plan médian transversal de la bille 30, perpendiculaire à l'axe du logement 21a-c. Grâce à sa construction, la bague de guidage et d'étanchéité 50 remplit plusieurs fonctions : elle porte la bille 30, la positionne et la guide dans le logement 21a-c, et la maintient centrée dans l'axe de ce logement, tout en assurant l'étanchéité entre le milieu ambiant et l'intérieur du logement 21a-c. Selon que la bague de guidage et d'étanchéité 50 est réalisée dans une matière souple ou rigide, elle est faite d'une seule pièce ou d'au moins deux pièces assemblées par tout moyen approprié. Dans le premier cas, la bille 30 est montée en force dans la bague de guidage et d'étanchéité 50 par déformation de la matière et, dans le second cas, la bague de guidage et d'étanchéité 50 est assemblée autour de la bille 30.

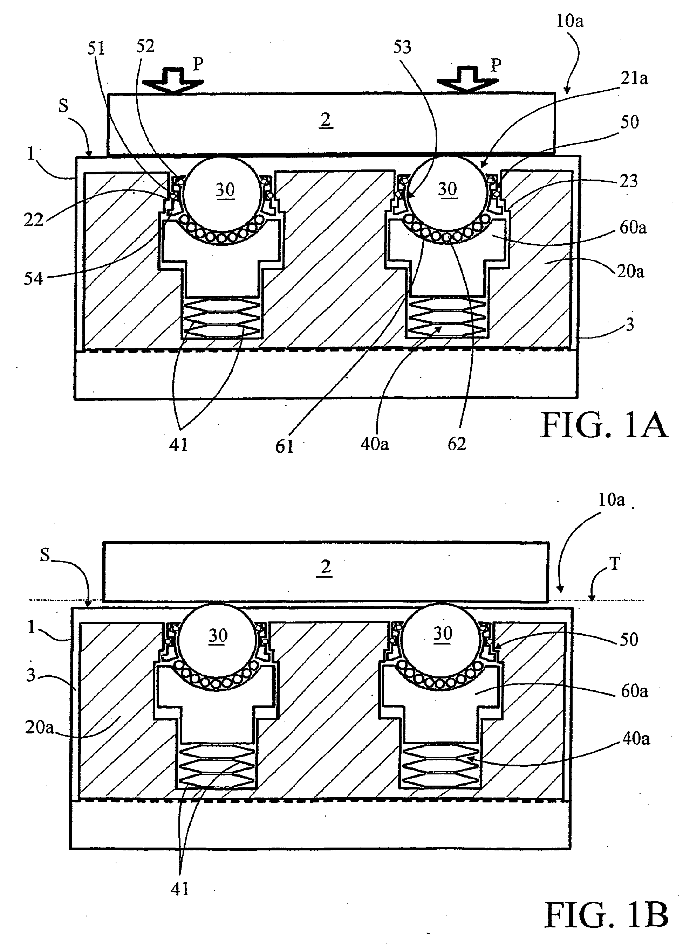

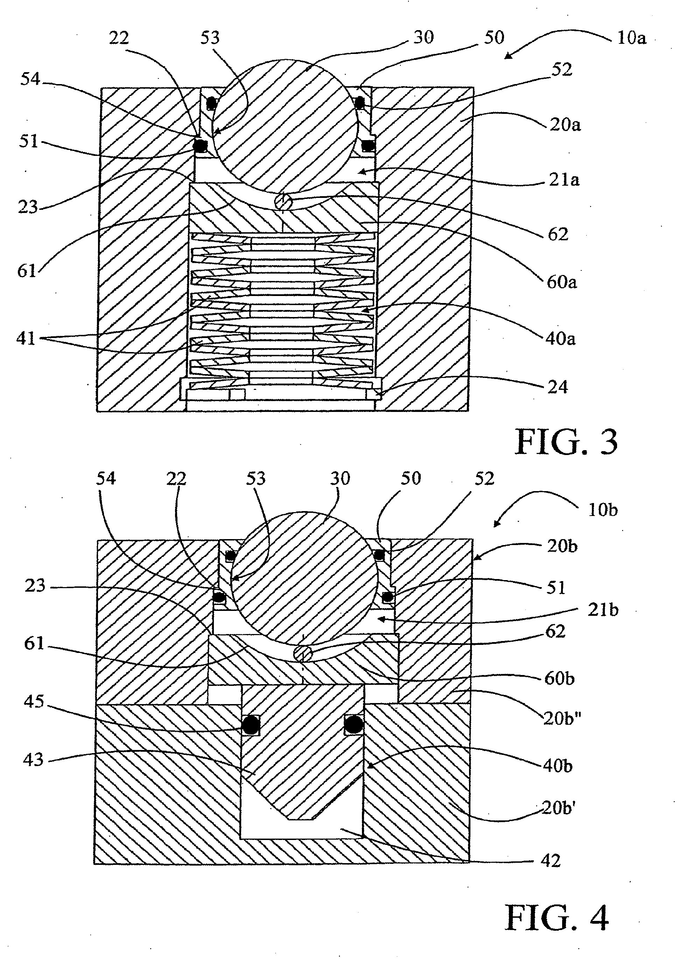

Dans le dispositif à roulements escamotables 10a, représenté aux figures 1A, 1B et 3, le profilé 20a est monté fixe à l'intérieur de la rainure 3 de la table porte-charge 1 et les billes 30 sont mobiles au moins entre les positions de travail et de repos. A cet effet, chaque bague de guidage et d'étanchéité 50 portant une bille 30 est montée dans un logement 21a du profilé 20a moyennant un jeu autorisant son déplacement axial à l'intérieur de ce logement 21a. Le logement 21a comporte une première butée axiale 22 pour limiter la course de la bague de guidage et d'étanchéité 50 au moins en direction de la sortie du logement 21a afin de définir la position sortie maximale de la bille 30. Cette première butée axiale 22 est formée d'un épaulement ou similaire, qui coopère avec une collerette 54 ou similaire, prévue sur la bague de guidage et d'étanchéité 50.

Chaque organe de roulement 30 est guidé en rotation par un guide de roulement 60a monté directement dans le logement 21a du profilé 20a, sollicité en translation axiale par les moyens de déplacement 40a. Ce guide de roulement 60a comporte une cuvette 61 sphérique adaptée au diamètre de la bille 30 et agencée pour la guider et la porter par l'intermédiaire d'un lit de petites billes 62 ou tout autre moyen équivalent. Ces petites billes 62 disposent d'un espace de circulation délimité par le guide de roulement 60a, la bille 30, la bague de guidage et d'étanchéité 50 et le logement 21a. Cet espace de circulation est plus grand que dans les dispositifs de l'art antérieur grâce à la suppression du corps et du chapeau des modules de roulement classiques, ce qui a permis d'augmenter leur diamètre.

Dans ce premier mode de réalisation, les moyens de déplacement 40a sont mécaniques et comportent des éléments ressort 41, tels qu'un empilage de rondelles Belleville® ou similaire, disposés entre le fond du logement 21 a borgne ou délimité par une rondelle 24, et la base du guide de roulement 60a de manière à solliciter la bille 30 en position sortie. Le guide de roulement 60a est par conséquent guidé en translation axiale par les parois intérieures du logement 21a. Ce logement 21a comporte une seconde butée axiale 23, sous la forme d'un épaulement ou similaire coopérant avec le guide roulement 60a, pour limiter sa course au moins en direction de la sortie du logement 21a.

La position rentrée maximale de la bille 30 peut être délimitée par les éléments ressort 41 eux-mêmes lorsqu'ils sont comprimés, ou par d'autres butées axiales prévues dans le logement 21a du profilé 20a pour limiter la course de la bille 30 et/ou du guide de roulement 60 en direction du fond de ce logement 21a.

A vide, les billes 30 de ce dispositif à roulements escamotables 10a sont en position sortie maximale, saillantes de la surface S de la table porte-charge 1, la bague de guidage et d'étanchéité 50 est en position haute limitée par la première butée axiale 22, le guide de roulement 60a est en position haute limitée par la bille 30 et les éléments ressort 41 sont détendus.

En charge normale, si le poids de la charge 2 est inférieur ou égale à la force de rappel des éléments ressort 41, comme illustré à la figure 1B, les billes 30 s'enfoncent un peu, déplaçant simultanément la bague de guidage et d'étanchéité 50 et le guide de roulement 60, et comprimant légèrement les éléments ressort 41. Elles restent saillantes en position de travail de manière à porter la charge 2, qui peut être déplacée et/ou positionnée par roulage sans friction dans le plan de transfert T défini par ces mêmes billes 30.

En surcharge, par exemple sous l'action d'une presse P, si le poids de la charge 2 devient supérieur à la force de rappel des éléments ressort 41, comme illustré à la figure 1A, les billes 30 se rétractent à l'intérieur du logement 21a en position de repos dans laquelle elles restent en contact avec la charge 2, cette dernière reposant sur la table porte-charge 1. Lorsque les billes 30 se rétractent, elles entraînent avec elles la bague de guidage et d'étanchéité 50 et le guide de roulement 60a, et compriment les éléments ressort 41.

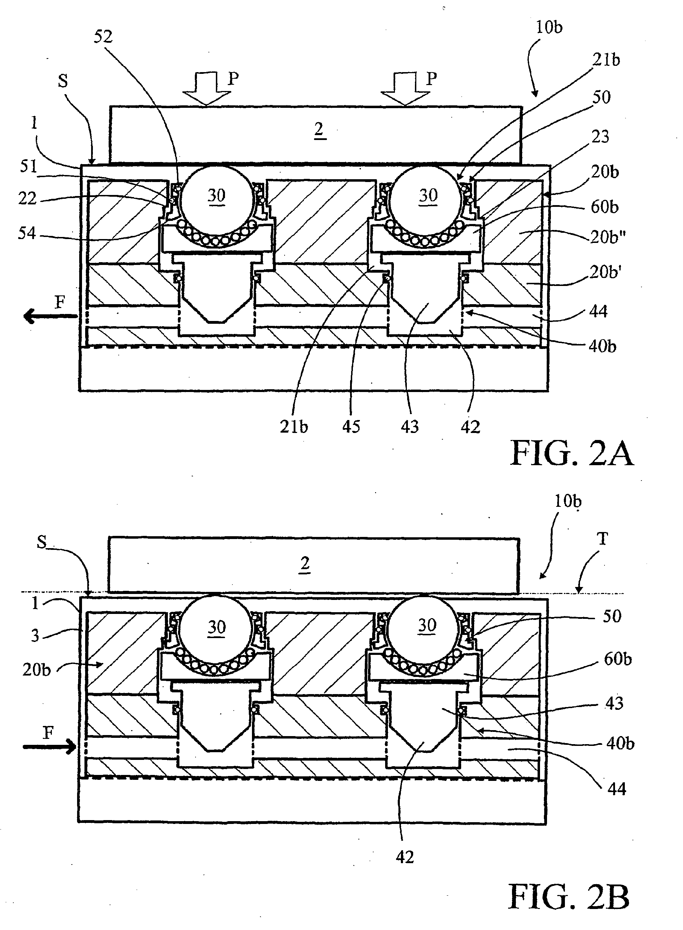

Dans le dispositif à roulements escamotables 10b, représenté aux figures 2A, 2B et 4, le profilé 20b est également monté fixe à l'intérieur de la rainure 3 de la table porte-charge 1, les billes 30 étant mobiles au moins entré les positions de travail et de repos. Le montage de la bague de guidage et d'étanchéité 50 dans le logement 21b du profilé 20b est similaire au précédent et ne sera plus décrit, de même que le guidage en rotation de la bille 30 par le guide de roulement 60b.

Dans ce deuxième mode de réalisation, les moyens de déplacement 40b sont hydrauliques et comportent, dans chaque logement 21b, une chambre 42 alimentée par un fluide sous pression F, dans laquelle se déplace un piston 43 couplé au guide de roulement 60b. Le profilé 20b comporte un conduit 44 raccordé à une alimentation de fluide sous pression F (non représentée), formant un circuit hydraulique qui s'étend longitudinalement pour communiquer avec toutes les chambres 42 de manière à les alimenter simultanément. Le piston 43 est guidé en translation axiale par les parois de la chambre 42. L'étanchéité hydraulique par rapport au reste du logement 21b est assurée par un ou plusieurs organes d'étanchéité 45, tel qu'un joint torique ou similaire, logé dans une gorge ménagée en périphérie de la chambre 42 et/ou du piston 43. La forme de la base du piston 43 est sensiblement conique ou tronconique pour augmenter la surface en contact avec le fluide sous pression.

Dans cette forme de réalisation, le profilé 20b est réalisé en deux parties assemblées : une partie inférieure 20b' comportant les chambres 42 et le conduit 44, et une partie supérieure 20b" comportant les logements 21b abritant les organes de roulement 30 maintenus par les bagues de guidage et d'étanchéité 50 et portés par les guides de roulement 60b. Les guides de roulement 60b et les pistons 43 peuvent être formés d'une seule pièce ou de deux pièces assemblées ou simplement superposées. La position rentrée maximale de la bille 30 est limitée par l'épaulement entre le piston 43 et le guide de roulement 60b butant contre la partie inférieure 20b' du profilé 20b.

A vide et en présence d'une pression de fluide F, les billes 30 de ce dispositif à roulements escamotables 10b sont en position sortie maximale, la bague de guidage et d'étanchéité 50 est en position haute limitée par la première butée axiale 22, le guide de roulement 60b est en position haute limitée par la bille 30 et le piston 43 est plaqué contre lui. Les billes 30 sont saillantes à la surface S de la table porte-charge 1.

En charge, si la pression du fluide F est supérieure ou égale au poids de la charge 2, comme illustré à la figure 2B, les billes 30 restent saillantes en position de travail de manière à porter la charge 2, qui peut être déplacée et/ou positionnée par roulage sans friction dans le plan de transfert T défini par ces mêmes billes 30.

En charge, si la pression du fluide F diminue et devient inférieure au poids de la charge 2, comme illustré à la figure 2A, les billes 30 se rétractent à l'intérieur du logement 21b en position de repos dans laquelle elles restent en contact avec la charge 2, cette dernière reposant sur la table porte-charge 1. Lorsque les billes 30 se rétractent, elles entraînent avec elles la bague de guidage et d'étanchéité 50, le guide de roulement 60b et le piston 43.

### Meilleure manière de réaliser l'invention :

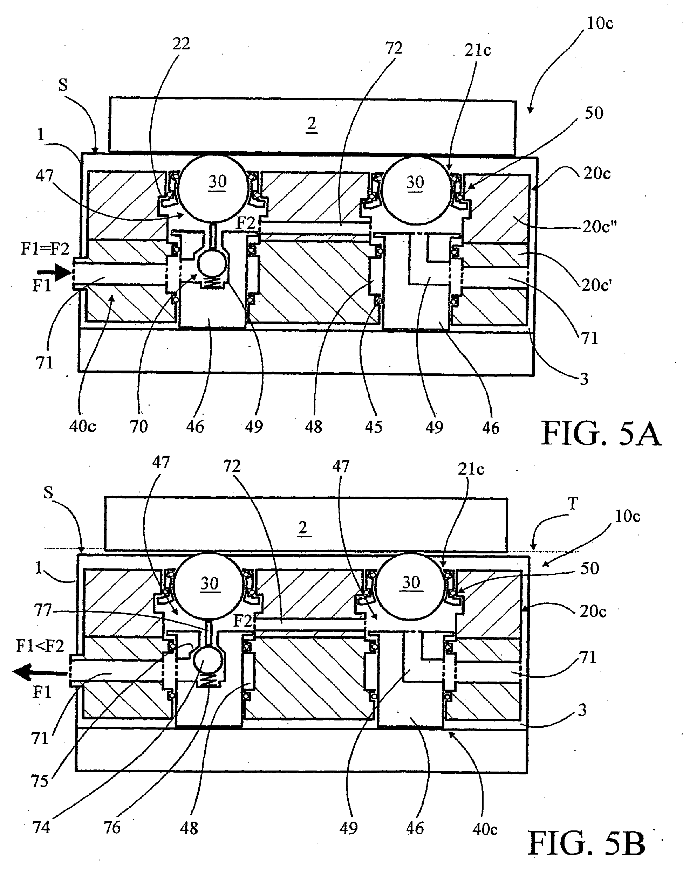

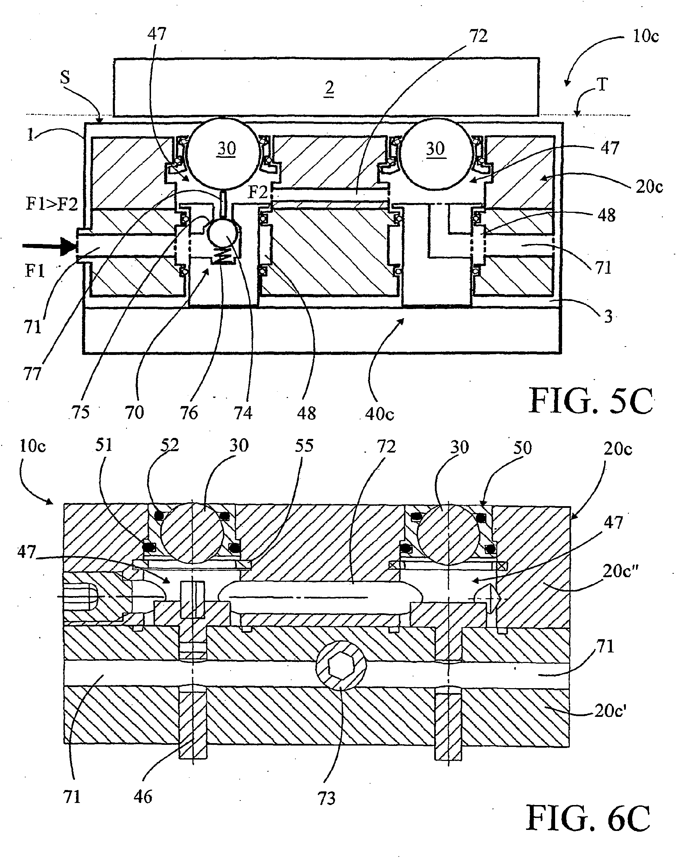

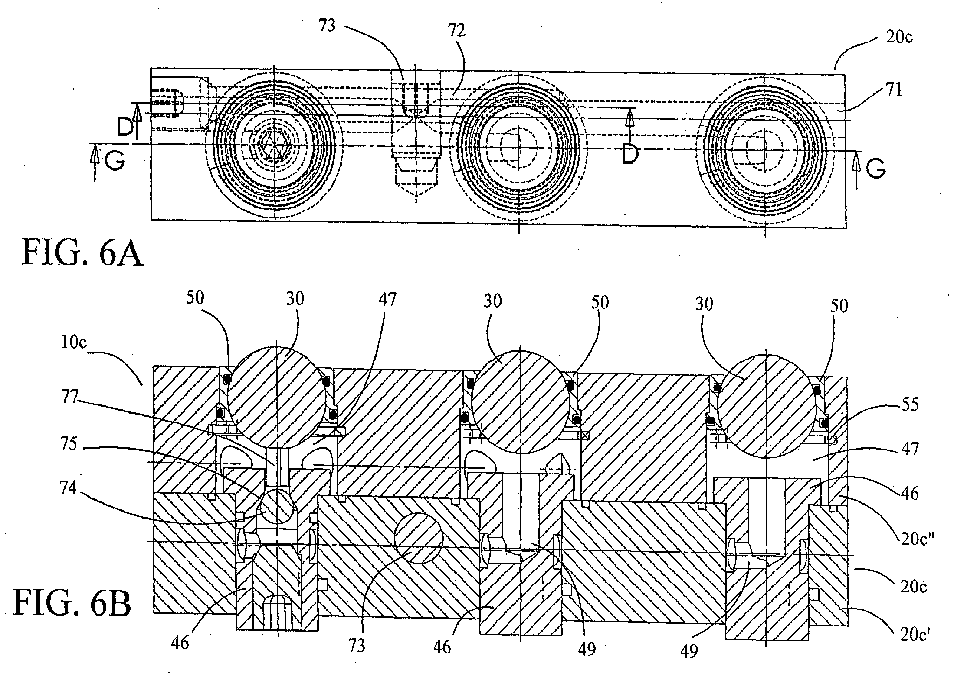

Dans le dispositif à roulements escamotables 10c, représenté aux figures 5A-C et 6A-C, le profilé 20c est mobile à l'intérieur de la rainure 3 de la table porte-charge 1 au moins entre les positions de travail et de repos et les billes 30 sont montées fixes dans le profilé 20c. A cet effet, chaque bague de guidage et d'étanchéité 50 portant un organe de roulement 30 est montée dans un logement 21c du profilé 20c et bloquée en position haute contre la première butée axiale 22 par une rondelle d'arrêt 55 (voir fig. 6B, 6C).

Dans ce troisième mode de réalisation, les moyens de déplacement 40c sont hydrauliques et sont également agencés pour guider en rotation les billes 30 sur un lit de fluide sous pression F2. Ils comportent, dans chaque logement 21c traversant, un piston 46 en appui contre le fond de la rainure 3 de la table porte-charge 1, ce piston 46 délimitant avec la bille 30 une première chambre 47 alimentée en fluide sous pression F2 pour créer le lit de fluide. Chaque logement 21c comporte une seconde chambre 48 alimentée en fluide sous pression et dans laquelle se déplace le piston 46. Cette seconde chambre 48 est disposée de manière annulaire autour du piston 46 et rendue étanche hydrauliquement par des organes d'étanchéité 45, tels que des joints toriques ou similaires, logés dans des gorges ménagées en périphérie de la seconde chambre 48 et/ou du piston 46, de part et d'autre du premier conduit 71 décrit plus loin. Ce piston 46 comporte un canal intérieur 49, par exemple en forme de L, agencé pour mettre en communication cette seconde chambre 48 avec la première chambre 47 d'un même logement 21c.

Les moyens de déplacement 40c comportent également une vanne 70 agencée pour contrôler la pression du fluide à l'intérieur des chambres 47, 48. A cet effet, cette vanne 70 est disposée dans le premier logement 21c ou logement amont du profilé 20c, qui communique directement avec la source d'alimentation en fluide sous pression F1 (non représentéé). Dans l'exemple représenté, cette vanne 70 est logée dans le canal intérieur 49 du piston 46 amont. L'entrée de cette vanne 70 communique avec la source d'alimentation en fluide sous pression F1 par la seconde chambre 48 et un premier conduit 71 prévu dans le profilé 20c. Dans cet exemple, le premier conduit 71 s'étend longitudinalement à travers le profilé 20c et communique avec toutes les secondes chambres 48 sauf avec celle du deuxième logement 21c. Pour cette raison, un obturateur 73 est placé dans ce premier conduit 71, entre le premier et le deuxième logements 21c, pour interdire le passage du fluide sous pression F1 et le forcer à travers la vanne 70. La sortie de cette vanne 70 communique avec la première chambre 47 du premier logement 21c puis avec la première chambre 47 du second logement 21c, en court-circuitant l'obturateur 73, par un second conduit 72 prévu dans le profilé 20c. Cette vanne 70 comporte un clapet 74, par exemple une bille ou similaire, sollicité contre un siège 75 en position fermée par un organe de rappel 76. Ce clapet 74 est sollicité en position ouverte par la bille 30 correspondante via une pièce de commande 77, par exemple un pointeau. Le clapet 74, son organe de rappel 76 et sa pièce de commande 77 sont alignés dans l'axe du piston 46 et de la bille 30.

Dans cette forme de réalisation, le profilé 20c est réalisé en deux parties assemblées : une partie inférieure 20c' comportant les secondes chambres 48, le premier conduit 71 et l'obturateur 73, et une partie supérieure 20c" comportant les logement 21c abritant les billes 30 maintenues par les bagues de guidage et d'étanchéité 50, les premières chambres 47 et le second conduit 72.La position sortie maximale du profilé 20c est limitée par l'épaulement du piston 47 butant contre sa partie inférieure 20c'.

Dans une variante de réalisation non représentée, la partie supérieure 20c" du profilé 20c comporte le conduit 72 qui s'étend longitudinalement pour communiquer avec toutes les chambres 47. Dans ce cas, la partie inférieure 20c' comporte un perçage formant le conduit 71 s'étendant uniquement entre la source de fluide sous pression et l'entrée de la vanne 70. Dans ce cas également, on supprime l'obturateur 73, les secondes chambres 48 et une partie de leurs organes d'étanchéité 45 ainsi que les conduits intérieurs 49 des pistons 46.

### Possibilités d'application industrielle :

A vide et sans pression de fluide (F1=F2=0), le profilé 20c de ce dispositif à roulements escamotables 10c est en position rentrée, le fond de la rainure 3 délimitant sa position rentrée maximale. La vanne 70 est ouverte, le clapet 74 étant éloigné de son siège 75 par la pièce de commande 77 sur laquelle appuie la bille 30. Les premières chambres 47, les secondes chambres 48, le premier conduit 71, le second conduit 72 et les canaux intérieurs 49, qui forment le circuit hydraulique, communiquent et sont à une pression nulle.

En charge, si la pression du fluide F1 augmente mais reste inférieure au poids de la charge 2, comme illustré à la figure 5A, la vanne 70 étant ouverte sous l'action de la bille 30, le circuit hydraulique se charge à une même pression en tout point (F1=F2). Le profilé 20c s'élève légèrement en position de repos, dans laquelle les billes 30 sont en contact avec la charge 2, cette dernière reposant sur la table porte-charge 1.

En charge, si la pression du fluide F1 augmente et devient supérieure au poids de la charge 2, comme illustré à la figure 5C, le circuit hydraulique monte en pression F2 en soulevant le profilé 20c en position de travail, dans laquelle les billes 30 portent la charge 2, qui peut être déplacée et/ou positionnée par roulage sans friction dans le plan de transfert T défini par ces mêmes billes 30 portées par un lit de fluide sous pression F2. La bille 30 amont, en s'éloignant du piston 46 amont, provoque la fermeture de la vanne 70 étant donné que la pièce de commande 77 n'exerce plus de pression sur le clapet 74. La pression de fluide F2 reste présente dans le circuit hydraulique tant que la vanne 70 reste en position fermée, c'est-à-dire tant que la pression de fluide F1 à la source reste supérieure à F2. On est dans une position d'équilibre.

En charge, si la pression de fluide F1 à la source diminue et devient inférieure à la pression de fluide F2 dans le circuit hydraulique, comme illustré à la figure 5B, le déséquilibre provoque l'ouverture de la vanne 70 qui fait chuter la pression de fluide F2 dans le circuit hydraulique. Le profilé 20c descend sous le poids de la charge 2 en appui sur les billes 30. La bille 30 amont, en s'approchant du piston 46 amont, exerce une pression sur la pièce de commande 77 qui maintient le clapet 74 en position ouverte.

Le dispositif à roulements escamotables 10a-c selon l'invention peut être réalisé par tout moyen approprié et en toute matière adéquate. Le profilé 20a-c peut être réalisé en aluminium extrudé et les logements 21a-c peuvent être obtenus par usinage. Les bagues de guidage et d'étanchéité 50 peuvent être réalisées en matières synthétiques souples ayant un bon coefficient de frottement ou en acier usiné ayant une bonne tenue aux hautes températures, selon les applications. Les guides de roulement 60a, 60b et les pistons 43, 46 peuvent être réalisés en acier usiné. On choisira de préférence un diamètre de piston équivalent au diamètre de la bille 30 dans le but d'équilibrer les pressions.

Lors de son utilisation, l'intérieur du dispositif à roulements escamotables 10a-c selon l'invention est protégé efficacement par les bagues de guidage et d'étanchéité 50 contre toute pollution extérieure. La présence de ces bagues de guidage et d'étanchéité 50 a permis d'envisager une version toute hydraulique comme celle illustrée par les figures 5 et 6, qui était irréalisable avec les dispositifs de l'état de la technique. Cette version toute hydraulique a l'avantage de supprimer le lit de petites billes générateur de dysfonctionnements. De plus, la pression hydraulique P2 régnant dans le circuit hydraulique assure une lubrification automatique des billes 30. Les fuites légères qui peuvent survenir au niveau des bagues de guidage et d'étanchéité 50 favorisent encore la protection du dispositif contre toute pollution extérieure, assurant un nettoyage automatique vers l'extérieur du dispositif. Ces fuites possibles permettent aussi de protéger le circuit hydraulique contre toute surpression.

Ainsi, il ressort clairement de cette description que l'invention permet d'atteindre tous les buts fixés.

## Revendications

1. Dispositif à roulements escamotables (10a-c) pour table porte-charge (1) destiné à faciliter le déplacement et/ou le positionnement de charges (2) lourdes dans un plan de transfert (T) parallèle à ladite table porte-charge (1), ce dispositif comportant un profilé (20a-c) pourvu de billes (30) et de moyens de déplacement (40a-c) agencés pour déplacer lesdites billes (30) entre une position de travail dans laquelle elles sont saillantes dudit profilé de manière à porter ladite charge (2) et une position de repos dans laquelle elles sont escamotées dans ledit profilé de manière à ne pas porter ladite charge (2), **caractérisé en ce que** chaque bille (30) est montée dans un logement (21a-c) dudit profilé (20a-c) au moyen d'une bague de guidage et d'étanchéité (50) pourvue d'une cavité sphérique (53) complémentaire à ladite bille (30) et apte à la recouvrir sur une zone qui s'étend de part et d'autre du plan médian transversal de ladite bille (30) pour la maintenir en position par rapport audit logement (21a-c) et **en ce que** ladite bague de guidage et d'étanchéité (50) comporte des moyens pour assurer une étanchéité entre ladite bille (30) et ledit logement (21a-c).

2. Dispositif selon la revendication 1, **caractérisé en ce que** ladite bague de guidage et d'étanchéité (50) comporte des moyens d'étanchéité intégrés et constitués de reliefs périphériques.

3. Dispositif selon la revendication 1, **caractérisé en ce que** ladite bague de guidage et d'étanchéité (50) comporte des moyens d'étanchéité rapportés et constitués de joints (51, 52).

4. Dispositif selon la revendication 1, **caractérisé en ce que** ladite bague de guidage et d'étanchéité (50) est montée dans ledit logement (21a-c) moyennant ùn jeu autorisant son déplacement axial par rapport audit logement (21a-c) et **en ce que** ledit logement (21a-c) comporte au moins une première butée axiale (22) agencée pour limiter la course de ladite bague de guidage et d'étanchéité (50) au moins en direction de sa sortie.

5. Dispositif selon la revendication 1, **caractérisé en ce que** ladite bague de guidage et d'étanchéité (50) est réalisée d'une seule pièce en une matière souple et **en ce que** ladite bille (30) est montée en force dans ladite bague de guidage et d'étanchéité (50).

6. Dispositif selon la revendication 1, **caractérisé en ce que** ladite bague de guidage et d'étanchéité (50) est réalisée en une matière rigide en au moins deux pièces assemblées de part et d'autre de ladite bille (30).

7. Dispositif selon la revendication 1, **caractérisé en ce qu'**il comporte, pour chaque bille (30), un guide de roulement (60a-b) monté directement dans le logement (21a-b) dudit profilé (20a-b), agencé pour être mobile en translation axiale sous l'action desdits moyens de déplacement (40a-b), ce guide de roulement (60a-b) étant pourvu d'une cuvette (61) pour guider ladite bille (30) en rotation par l'intermédiaire d'un lit de petites billes (62) disposant d'un espace de circulation délimité entre ladite bille (30), le guide de roulement (60a-b), la bague de guidage et d'étanchéité (50) et ledit logement (21a-b).

8. Dispositif selon la revendication 7, **caractérisé en ce que** ledit logement (21a-b) comporte au moins une seconde butée axiale (23) agencée pour limiter la course dudit guide de roulement (60a-b) au moins en direction de sa sortie.

9. Dispositif selon la revendication 7, **caractérisé en ce que** lesdits moyens de déplacement (40a) sont mécaniques et comportent dans chaque logement (21a) des éléments ressort (41) agencés pour solliciter ladite bille (30) en position de travail.

10. Dispositif selon la revendication 7, **caractérisé en ce que** lesdits moyens de déplacement (40b) sont hydrauliques et comportent dans chaque logement (21b) une chambre (42) alimentée en fluide sous pression, dans laquelle se déplace un piston (43) coopérant avec ledit guide de roulement (60b) de manière à solliciter ladite bille (30) en position de travail.

11. Dispositif selon la revendication 10, **caractérisé en ce qu'**il comporte un circuit hydraulique (44) raccordé à une alimentation de fluide sous pression et communiquant avec toutes les chambres (42).

12. Dispositif selon la revendication 1, **caractérisé en ce que** lesdits moyens de déplacement (40c) sont hydrauliques et agencés pour guider en rotation lesdites billes (30) sur un lit de fluide.

13. Dispositif selon la revendication 12, **caractérisé en ce que** lesdits moyens de déplacement (40c) comportent, dans chaque logement (21c), un piston (46) délimitant avec ladite bille (30) une chambre (47) alimentée en fluide sous pression pour créer ledit lit de fluide.

14. Dispositif selon la revendication 13, **caractérisé en ce que** lesdits moyens de déplacement (40c) comportent une vanne (70) agencée pour contrôler la pression dudit fluide à l'intérieur desdites chambres (47).

15. Dispositif selon la revendication 14, **caractérisé en ce que** ladite vanne (70) est ménagée dans le piston (46) amont et **en ce qu'**il comporte un circuit hydraulique raccordé à une alimentation de fluide sous pression et communiquant avec toutes les chambres (47) par l'intermédiaire de ladite vanne (70).

16. Dispositif selon la revendication 15, **caractérisé en ce que** ladite vanne (70) comporte un clapet (74) monté dans un canal intérieur (49) dudit piston (46) amont et commandé à l'ouverture par ladite bille (30) correspondante en position de repos.

17. Dispositif selon l'une quelconque des revendications 10 et 13, **caractérisé en ce que** le diamètre des pistons (43, 46) est sensiblement égal au diamètre de ladite bille (30).

18. Table porte-charge (1), **caractérisée en ce qu'**elle comporte des dispositifs à roulements escamotables (10a-b) selon l'une quelconque des revendications 1 à 11, les profilés (20a-b) de ces dispositifs à roulements escamotables (10a-b) étant montés fixes par rapport à ladite table porte-charge (1).

19. Table porte-charge, **caractérisée en ce qu'**elle comporte des dispositif à roulements escamotables (10c) selon l'une quelconque des revendications 1 à 6 et 12 à 17, les profilés (20c) de ces dispositifs à roulements escamotables (10c) étant montés mobiles par rapport à ladite table porte-charge (1) dans une direction perpendiculaire à la surface (S) de ladite table.

## Claims

1. A retractable bearings device (10a-c) for a loading table (1) to facilitate the displacement and/or positioning of heavy loads (2) in a transfer plane (T) parallel to said loading table (1), said device comprising a profile(20a-c) equipped with balls (30) and displacement means (40a-c) for displacing said balls (30) between a working position in which they project from said profile in order to support said load (2) and a resting position in which they are retracted within said profile and do not support the load (2), **characterized in that** each ball (30) is attached to a housing (21a-c) in said profile (20a-c) by a guide and sealing ring (50) with a spherical cavity (53) that complements said ball (30) and covering an area that extends from either side of the median transverse plane of said ball (30) to maintain it in position relative to said housing (21a-c) and **in that** said guide and sealing ring (50) comprises a means for forming a seal between said ball (30) and said housing (21a-c).

2. A device according to claim 1 **characterized in that** said guide and sealing ring (50) comprises integrated sealing means consisting of raised peripheral areas.

3. A device according to claim 1 **characterized in that** said guide and sealing ring (50) comprises attached sealing means consisting of seals (51, 52).

4. A device according to claim 1 **characterized in that** said guide and sealing ring (50) is attached inside said housing (21a-c) so there is play allowing it to be axially displaced relative to said housing (21 a-c) and **in that** said housing (21a-c) comprises at least a first axial stop (22) to limit the course of said guide and sealing ring (50) at least in the direction of its exit.

5. A device according to claim 1 **characterized in that** said guide and sealing ring (50) is made of a single piece of flexible material and **in that** said ball (30) is forcibly attached inside said guide and sealing ring (50).

6. A device according to claim 1 **characterized in that** said guide and sealing ring (50) is made of rigid material in at least two parts assembled on either side of said ball (30).

7. A device according to claim 1 **characterized in that** it comprises for each ball (30) a bearing guide (60a-b) attached directly inside the housing (21 a-b) of said profile (20a-b) designed to move in axial translation under the influence of said displacement means (40a-b), said bearing guide (60a-b) being equipped with a cup (61) to guide said ball (30) in rotation using a bed of small balls (62) traveling in an area defined by said ball (30), the bearing guide (60a-b), the guide and sealing ring (50), and said housing (21a-b).

8. A device according to claim 7 **characterized in that** said housing (21a-b) comprises at least a second axial stop (23) to limit the course of said bearing guide (60a-b) at least in the direction of the exit.

9. A device according to claim 7 **characterized in that** said displacement means (40a) are mechanical and they comprise in each housing (21a) spring elements (41) for urging said ball (30) into the working position.

10. A device according to claim 7 **characterized in that** said displacement means (40b) are hydraulic and they comprise in each housing 21(b) a chamber (42) supplied with pressurized fluid in which a piston (43) is displaced, cooperating with said bearing guide (60b) so as to urge said ball (30) into the working position.

11. A device according to claim 10 **characterized in that** it comprises a hydraulic circuit (44) connected to a supply of pressurized fluid and communicating with all the chambers (42).

12. A device according to claim 1 **characterized in that** said displacement means (40c) are hydraulic and designed to guide said balls (30) in rotation on a bed of fluid.

13. A device according to claim 12 **characterized in that** said displacement means (40c) comprises in each housing (21c) a piston (46) defining along with said ball (30) a chamber (47) supplied with pressurized fluid to create said bed of fluid.

14. A device according to claim 13 **characterized in that** displacement means (40c) comprises a valve (70) for controlling the pressure of said fluid inside said chambers (47).

15. A device according to claim 14 **characterized in that** said valve (70) is located in the upstream piston (46) and **in that** it comprises a hydraulic circuit connected to a supply of pressurized fluid and communicating with all the chambers (47) by means of said valve (70).

16. A device according to claim 15 **characterized in that** said valve (70) comprises a clapper (74) attached in an interior channel (49) of said upstream piston (46) and caused to open by said corresponding ball (30) in the resting position.

17. A device according to either one of claims 10 and 13 **characterized in that** the diameter of the pistons (43, 46) is generally equal to the diameter of said ball (30).

18. A loading table (1) **characterized in that** it comprises retractable bearings devices (10a-b) according to any one of claims 1 through 11, the profiles (20 a-b) of these retractable bearings devices (10a-b) being fixed relative to said loading table (1).

19. A loading table (1) **characterized in that** it comprises retractable bearings devices (10c) according to any one of claims 1 through 6 and 12 through 17, the profiles (20c) of these retractable bearings devices (10c) being movable relative to said loading table (1) in a perpendicular direction to the surface (S) of said table.

## Patentansprüche

1. Vorrichtung mit versenkbaren Kugellagern (10a-c) für einen Lastenträgertisch (1), der zur Erleichterung der Verlagerung und/oder der Positionierung schwerer Lasten (2) auf einer Übertragungsebene (T) bestimmt ist, die parallel zu dem Lastenträgertisch (1) verläuft, wobei die Vorrichtung ein Profil (20a-c) aufweist, das mit Kugeln (30) und Verlagerungseinrichtungen (40a-c) versehen ist, die angeordnet sind, um die Kugeln (30) zwischen einer Arbeitsposition, in der sie über das Profil hinausragen, so dass sie die Last (2) tragen, und einer Ruheposition zu verlagern, in der sie derart in das Profil versenkt sind, dass sie die Last (2) nicht tragen, **dadurch gekennzeichnet, dass** jede Kugel (30) in einer Aufnahme (21a-c) des Profils (20a-c) mittels einer Führungs- und Dichtungshülse (50) angebracht ist, die mit einem kugelförmigen Hohlraum (53) versehen ist, der komplementär zu der Kugel (30) und in der Lage ist, diese über eine Zone zu bedecken, die sich beiderseits der transversalen Mittelebene der Kugel (30) erstreckt, um diese im Verhältnis zu der Aufnahme (21a-c) in ihrer Position zu halten, und wobei die Führungs- und Dichtungshülse (50) Einrichtungen aufweist, um eine Dichtigkeit zwischen der Kugel (30) und der Aufnahme (21a-c) sicher zu stellen.

2. Vorrichtung nach Anspruch 1, **dadurch gekennzeichnet, dass** die Führungs- und Dichtungshülse (50) Abdichtungseinrichtungen aufweist, die integriert sind und aus peripherischen Reliefs bestehen.

3. Vorrichtung nach Anspruch 1, **dadurch gekennzeichnet, dass** die Führungs- und Dichtungshülse (50) Abdichtungseinrichtungen aufweist, die angesetzt sind und aus Dichtungen (51,52) bestehen.

4. Vorrichtung nach Anspruch 1, **dadurch gekennzeichnet, dass** die Führungs- und Dichtungshülse (50) mit Spiel in der Aufnahme (21a-c) angebracht ist, welches ihre Axialverlagerung im Verhältnis zu der Aufnahme (21a-c) zulässt, wobei die Aufnahme (21a-c) mindestens einen ersten Axialanschlag (22) aufweist, der angeordnet ist, um den Weg der Führungs- und Dichtungshülse (50) mindestens in Richtung ihres Ausgangs zu begrenzen.

5. Vorrichtung nach Anspruch 1, **dadurch gekennzeichnet, dass** die Führungs- und Dichtungshülse (50) aus einem einzelnen Teil aus einem flexiblen Werkstoff hergestellt ist, wobei die Kugel (30) in der Führungs- und Dichtungshülse (50) eingesprengt ist.

6. Vorrichtung nach Anspruch 1, **dadurch gekennzeichnet, dass** die Führungs- und Dichtungshülse (50) aus einem starren Werkstoff aus mindestens zwei Teilen hergestellt ist, die beiderseits der Kugel (30) montiert sind.

7. Vorrichtung nach Anspruch 1, **dadurch gekennzeichnet, dass** sie für jede Kugel (30) eine Kugellagerführung (60a-b) aufweist, die direkt in der Aufnahme (21a-b) des Profils (20a-b) angebracht ist, die angeordnet ist, um unter Einwirkung der Verlagerungseinrichtungen (40a-b) in Form einer Axialtranslation verlagerbar zu sein, wobei die Kugellagerführung (60a-b) mit einem Becken (61) versehen ist, um die Kugel (30) mittels eines Bettes aus kleinen Kugeln (62) zu führen, die über einen Umlaufraum verfügen, der zwischen der Kugel (30), der Kugellagerführung (60a-b), der Führungs- und Dichtungshülse (50) und der Aufnahme (2 1 ab) begrenzt ist.

8. Vorrichtung nach Anspruch 7, **dadurch gekennzeichnet, dass** die Aufnahme (21 ab) mindestens einen zweiten Axialanschlag (23) aufweist, der angeordnet ist, um den Weg der Kugellagerführung (60a-b) mindestens in Richtung ihres Ausgangs zu begrenzen.

9. Vorrichtung nach Anspruch 7, **dadurch gekennzeichnet, dass** die Verlagerungseinrichtungen (40a) mechanisch sind und in jeder Aufnahme (21a) Federelemente (41) aufweisen, die angeordnet sind, um die Kugel (30) in der Arbeitsposition zu belasten.

10. Vorrichtung nach Anspruch 7, **dadurch gekennzeichnet, dass** die Verlagerungseinrichtungen (40b) hydraulisch sind und in jeder Aufnahme (21b) eine Kammer (42) aufweisen, die mit unter Druck stehendem Fluid versorgt wird, in der sich ein mit der Kugellagerführung (60b) zusammenwirkender Kolben (43) so verlagert, dass er die Kugel (30) in der Arbeitsposition belastet.

11. Vorrichtung nach Anspruch 10, **dadurch gekennzeichnet, dass** sie einen Hydraulikkreislauf (44) aufweist, der mit einer Versorgung mit unter Druck stehendem Fluid verbunden ist, der mit allen Kammern (42) in Verbindung steht.

12. Vorrichtung nach Anspruch 1, **dadurch gekennzeichnet, dass** die Verlagerungseinrichtungen (40c) hydraulisch und angeordnet sind, um die Kugeln (30) drehbar auf einem Fließbett zu führen.

13. Vorrichtung nach Anspruch 12, **dadurch gekennzeichnet, dass** die Verlagerungseinrichtungen (40c) in jeder Aufnahme (21c) einen Kolben (46) aufweisen, der mit der Kugel (30) eine mit unter Druck stehendem Fluid versorgte Kammer (47) abgrenzt, um das Fließbett zu erzeugen.

14. Vorrichtung nach Anspruch 13, **dadurch gekennzeichnet, dass** die Verlagerungseinrichtungen (40c) ein Ventil (70) aufweisen, welches angeordnet ist, um den Druck des Fluids im Inneren der Kammern (47) zu regeln.

15. Vorrichtung nach Anspruch 14, **dadurch gekennzeichnet, dass** das Ventil (70) in den Kolben (46) stromaufwärts eingearbeitet ist, und dass er einen Hydraulikkreislauf aufweist, der mit einer Versorgung mit unter Druck stehendem Fluid verbunden ist, der über das Ventil (70) mit allen Kammern (47) in Verbindung steht.

16. Vorrichtung nach Anspruch 15, **dadurch gekennzeichnet, dass** das Ventil (70) eine Klappe (74) umfasst, die in einem Innenkanal (49) des Kolbens (46) stromaufwärts angebracht ist und bei der Öffnung durch die entsprechende Kugel (30) in Ruhestellung geregelt wird.

17. Vorrichtung nach einem der Ansprüche 10 und 13, **dadurch gekennzeichnet, dass** der Durchmesser der Kolben (43,46) praktisch gleich dem Durchmesser der Kugel (30) ist.

18. Lastenträgertisch (1), **dadurch gekennzeichnet, dass** er Vorrichtungen mit versenkbaren Kugellagern (10a-b) nach einem der Ansprüche 1 bis 11 aufweist, wobei die Profile (20a-b) der Vorrichtungen mit versenkbaren Kugellagern (10a-b) im Verhältnis zu dem Lastenträgertisch (1) fest angebracht sind.

19. Lastenträgertisch, **dadurch gekennzeichnet, dass** er Vorrichtungen mit versenkbaren Kugellagern (10c) nach einem der Ansprüche 1 bis 6 und 12 bis 17 aufweist, wobei die Profile (20c) der Vorrichtungen mit versenkbaren Kugellagern (10c) im Verhältnis zu dem Lastenträgertisch (1) in einer senkrecht zu der Oberfläche (S) des Tisches verlaufenden Richtung bewegbar sind.
